# EUROPEAN PATENT SPECIFICATION

(11) **EP 3 831 687 B1**
(45) Date of publication and mention of the grant of the patent: **14.01.2026**
(21) Application number: 19765571.5
(22) Date of filing: 02.08.2019
(51) Int. Cl.: B61F 5/38

(54) **RAILWAYS STEERING MECHANISM AND ITS METHOD OF OPERATION**
EISENBAHNLENKMECHANISMUS UND BETRIEBSVERFAHREN DAFÜR
DISPOSITIF DE GUIDAGE FERROVIAIRE ET SON PROCÉDÉ DE FONCTIONNEMENT

(30) Priority: 03.08.2018 PT 2018110903
(43) Date of publication of application: 09.06.2021
(73) Proprietor: Instituto Superior Técnico, 1049-001 Lisboa (PT)
(72) Inventor: ANDRÉ, José Maria Campos Da Silva, 1700-097 Lisboa (PT)
(74) Representative: do Nascimento Gomes, Rui
(86) International application number: PCT/PT2019/050027
(87) International publication number: WO 2020/027681

(56) References cited:
- EP-A1- 3 239 015
- WO-A1-98/46468
- AU-A1- 2009 202 967
- CN-A- 105 799 717
- DE-A1- 19 861 086
- GB-A- 657 264
- US-A1- 2008 083 345

## Description

### Field of the invention

The present invention applies to axles of trains steered by actuators. The reference embodiement regards a two axles automotive railcar, where the wheelbase coincides with most of the car body length. Nevertheless, the invention relates to general trains, with any number of vehicles.

### State of the art

It is common knowledge that isolated solid axles with conically tapered treads suffer from hunting instability at low velocity. The classic solution is to assemble the axles in bogies. The design of a bogie illustrates a typical engineering compromise between conflicting requirements: if the longitudinal stiffness is too small, the bogie is unstable; if the stiffness is too great, the bogie is stable up to a higher velocity, but at the cost of not being able to go through tight curves.

A related problem is the difference of the arclenghts travelled by the inside and outside wheels in a curve. If the wheels are independent, an appropriate difference in rotational speed accommodates the difference in arc length, but most railway axles are solid. These three topics - (a) the conicity of the tyres combined with the shape of the rail and the contact deformations, (b) the allowance of a lateral offset between the wheel and the rail and (c) the radial orientation of the axles - together create a very difficult challenge to solve.

A great deal of patents suggest improvements to address the hunting issue and improve the curving ability. It is common to rank them in passive approaches (often called "self-steering bogies") and active ones, usually with sensors and more or less powerful mechatronic units. The present invention shares some characteristics of both groups. It is not a mere passive mechanism, because it is a powered device, but it is neither a fully active one, since the actuators do not rely on sensing the response of the train.

The present invention shares some background with the proposals presented in [Andre, 2006 and 2008, vol.2]. The chapter of that book that specifically concerns the steering of trains has been partially published in [Andre, 2013]. Looking back, as it is acknowledged in these references, we find a remote relation between this specification and Alejandro Goicoechea US 2462666 A patent. He was one of the first to understand the importance of reducing significantly the weight of the trains and proposed the most successful alternative to current bogies. The fundamental developments of the last decades concerning the dynamic of conventional trains, including the technology behind high-speed trains, represent another important source of background knowledge.

Patent documents WO 98/46468 and AU 2009202967 disclose solutions for the automatic control of steering in trains, based on feedback, in which parameters such as the radius of curvature are measured and used to correct the steering of the axles of a train, and explicitly or implicitly resorting to force-actuators.

Patent document US 2008/0083345 discloses a more remote solution in which, despite the fact of also being based parameter measurement and feedback control, relates to a tramway system, in which a vehicle moves in a monorail but also in a road, with wheels. The solution of this document also resorts to force-actuators.

### Summary of the disclosure

The present invention replaces the conventional bogie setup by a powered geo-referenced steering mechanism, with the aim of improving both the curving ability and the dynamic stability of the train, and according to the object of claim 1.

In the present patent application, geo-referenced powered steering is based on the actual longitudinal position of the train along the track.

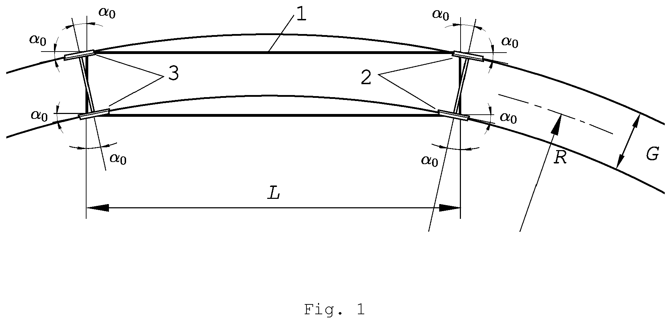

It is easy to assess the radius R of the track at the exact longitudinal location of a train because the geometry of the line does not change over time. The local radius of the track and therefore the appropriate steering angle of the wheels (α0 in Fig. 1) are only functions of the lengthwise distance travelled from a reference starting point.

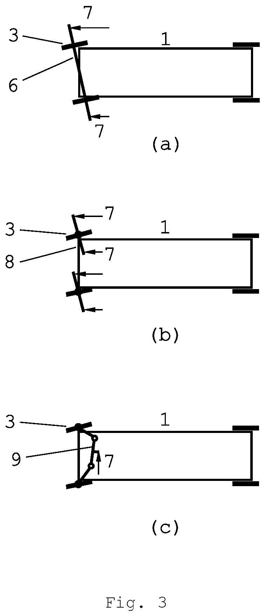

According to the invention, all the axles (6) are steered by actuators (7), that can be hydraulic, pneumatic or electrical, disposed at both extremities of the axle (Fig. 3-a). A geo-referenced control unit controls the stepping motor driving the linear actuators (7), in accordance with the local curvature of the track: a database of curvatures is available to that effect, on board of the train.

Each steering actuator (7), at each extremity of the axle, may advantageously be a pair of similar actuators (7-a) and (7-b), to offer some redundancy. For the same reason, stoppers can limit the stroke of the actuators. Moreover, in emergency situations, these stoppers can assume a safe-position that allows the pair of actuators to steer correctly the axle after the failure of one of the two actuators. The stoppers can be applied to the lever (26) instead of acting directly on the actuators.

The preferred solution for all the axles, except the first one, is to let the two wheels rotate independently. The first axle of the train is special in the sense that it will be often useful to impose a given difference of less than one rotation per second between the left and right wheels. For that purpose, a new differential transmission is included in the object of the present invention.

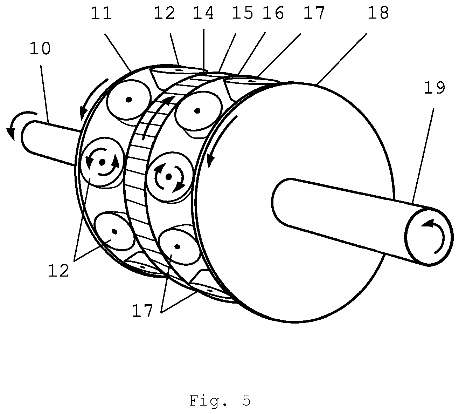

That new differential transmission is a symmetric assembly of two satellite gears, in mesh engagement on a common wheel. Figs. 5, 6 and 7 represent three simplified views of this transmission. A differential transmission between the two half-axles contains a satellite arrangement of the planet pinions (12), (17) and the sun-frames (20), (23) in which the teeth of the solar frames and the planetary gears can be replaced by friction wheels shifted axially to change the gear ratio.

Another issue addressed by this patent application is the concentrated wear pattern of the treads of the wheels and of the head of the rails, typically associated with very accurate steering mechanisms. Displacing the axle slightly to the left or to the right of the track can balance the wear. That very small displacement can be imposed by means of an angular deviation of the axle steering, or by a difference in angular velocity of the two half-shafts of the axle, or by changing the gauge of the axle.

### Preferred embodiments of the invention

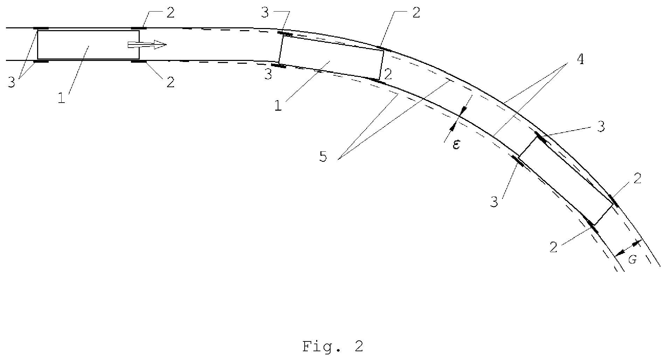

In the following paragraphs, we will have particularly in mind all the axles of the train (consisting in one or more railway vehicles), excluding the first axle. If those axles, excluding the first one, are fixed in yaw to the car body (1) in front of them, the wheels (3) are naturally oriented by that car body with some amount of oversteering. *I.e.,* the axles will tend to follow an interior path (trajectory (5) in Fig. 2), closer to the centre of the curve. The lateral offset *ε* between the rails (4) and the trajectory (5) of the wheels (3) depends on the length *L* of the wheelbase. As the train progresses in a curve of constant radius R, the offset *ε* increases and tends to a limiting value denoted *ε*_{∞}.

The precise steering angle required to cancel out the lateral offset of a wheel is *α*₀ = arcsin[*L* /(2 *R*)]*.* An angular error *δα* in that steering angle produces a maximum lateral offset of *ε*_{∞} ≈ *L δα.*

According to the invention, all the axles are steered by actuators (7) disposed at both extremities of the axle (6) (Fig. 3-a). These linear actuators may be satellite roller screws, driven by a stepping motor, with intermediate gears to multiply the torque. As stated above, a geo-referenced control unit rules the stepping motor according to the local curvature of the track: a database of curvatures is available on board of the train.

If the train heaves and banks simultaneously, as a result of a cant deficiency in a curve, or because of the tilting movement of the car body, the steering angle may be affected. If the steady-state attitude of the actuators (7) is horizontal, a pure movement in heave or a pure roll movement do not change the steering angle, but a combination of the two may give rise to a slight change in the steering angle. Since these events occur only on specific locations and have characteristic time-scales of several seconds, the control of the actuators can be programmed to counteract this tendency.

The preferred setup consists of collinear wheels (as represented in Fig. 1 and in Fig. 3-a), although the two wheels can rotate independently. This arrangement applies both to motorized and non-motorized wheels. If the two half-axles of the axle are collinear (Figs. 1 and 3-a), the steering angle that places the wheels in a radial position is the same for both wheels of the same axle.

The two half-axles (8) of an axle may be non-collinear and independently steered (Fig. 3-b). If they are linked by an Ackermann articulation (9) (Fig. 3-c), they exhibit a similar behaviour to that of collinear half-axles. As is well known, these connections were invented in Munich by Georg Lankensperger in 1817, but became known by the name of his agent Rudolph Ackermann who patented them in the United Kingdom in 1818. We remark that the geometry of an Ackerman connection appropriate for a car body well inscribed on a curve (Figs. 3) does not have the geometric proportions of the standard Ackermann connection, designed for vehicles where the rear axles are not steered. Instead of being steered together by means of a common link, the two wheels (3) of the axle (Fig. 3-b) can also be steered independently. If they are equally advanced in the reference frame of the car body, as represented in the sketch of Fig. 3-b, the steering angle of the inside wheel and the outside wheel are different. That difference is approximately Δ*α* = *L* G /(2 *R*²), where G denotes the gauge of the track (more accurately, the distance between the contact points or rolling lines). For most railway tracks, that difference Δ*α* is always smaller than 10⁻⁵ rad. Geo-referenced steering applies to both collinear and non-collinear half-axles.

In the preferred embodiment, the actuator (7), in each extremity of the axle, is a double actuator, consisting in a pair of actuators (7-a) and (7-b). These two actuators will normally make the same effort and move with the same velocity. Therefore, lever (26), whose fulcrum steers one extremity of axle (6), moves in uniform horizontal translation. The duplicated arrangement of the actuators provides some redundancy. In case one actuator blocks, the control of the other actuator would double its stroke to impose the correct displacement at the fulcrum of lever (26). If actuator (7-a) blocks, the control of actuator (7-b) doubles its stroke; if it is actuator (7-b) that blocks, the control of actuator (7-a) doubles its stroke. Stoppers (27) provide some additional redundancy. When one element of the pair of actuators collapses, the other actuator still holds one extremity of lever (26), while the extremity of the collapsed actuator is limited to swing within the range of the stoppers. A further safety action consists in moving the stopper (27) of the failed actuator towards the lever, constricting the loose swing movement of that extremity of the lever. By restricting the movement of that extremity of the lever (26) the stroke of the opposite actuator may be greater than usual: in this case, the corresponding stopper moves to a position where that movement is wider.

That is, in normal operation, the stopers (27) are fixed and secure, allowing the amplitude of the translation movement of the lever (26) required by the curves of the line on which the train travels. In the event that one of the two actuators (7-a) or (7-b) breaks and the corresponding end of the lever (26) is loose within the range allowed by the normal position of the corresponding stoper (27), this stoper moves to a position where the movement of said lever is restricted and steering is fully performed by the other actuator (7-a) or (7-b) still operational. In the event that an accident blocks one of the actuators (7-a) or (7-b) or destroys an actuator and causes the corresponding stoper (27) to move to a position in which the lever (26) is articulated without translation, so that the stroke required of the other actuator that still operates exceeds that imposed by its stoper, this limiter moves to a position where the operational actuator is free to move in a larger stroke than in usual operation.

Now, let us specifically consider the first axle of the train. The geo-referenced steering described above can also be used in the first axle of the train, but this leading axle requires some sort of additional position-control. Indeed, a geo-referenced steering provides a virtually ideal angular orientation of the axle, but the system needs some supplementary assistance to correct the lateral deviations. Considering the cartographic representation of the track as a one-dimensional function of a rectilinear co-ordinate, the steering angle is directly related with the second derivative of that function. The actual path of the axle is the result of integrating twice that second derivative. As is known, this procedure suffers an exponentially growing drift-error and, therefore, the mere geo-referenced steering of the leading axle is not enough to align the axle conveniently in the track.

However, from the control point of view, it is of great consequence that the automatic geo-referenced steering is almost perfect regarding the second derivative, since the fine-corrections required are of much greater wavelength than the curves of the track.

Let us consider a section of track where the exact radius is R. The exact steering angle to inscribe perfectly the car body in the curve, is *α*₀ = arcsin[*L* /(2 *R*)], as stated above. We take for granted that the signs of *α*₀ and R are consistent, to denote right-turning and left-turning curves. Due to a minute misalignment of the car body, the angle *α*₀ actually required is slightly different, say *α*₀'. Furthermore, the inaccuracy of the steering mechanism provides a steering angle *α*₀" slightly different from the theoretical value *α*₀. The sum of these two perturbations gives rise to a difference *δα* = *α*₀" - *α*₀' between the imposed steering angle *α*₀" and the actually required angle *α*₀'. The benefit of using the geo-referenced steering is that the modulus of *δα* is much smaller than the modulus of *α*₀. Hence, the system required to supplement the geo-referenced steering must handle a curvature related only with *δα* instead of with *α*₀.

If the angular deviation *δα,* due to the angular misalignment of the car body and the steering inacuracy, is approximately *δα* = ±0.0010 rad, it corresponds to going around a curve with a radius of 5 km (assuming a wheelbase *L* = 10 m). The use of conical wheels is very effective in curves with such great radii, without worries of dynamic instability, since the yaw stiffness of the vehicle can be very high even with a low longitudinal stiffness of the axle. With a long wheelbase, a soft longitudinal suspension may produce an overall steering stiffness comparable to that of current high-speed bogies.

There are also active alternatives available to effect the fine-tuning of the steering. With geo-referenced steering of the leading axle, an active control responding to perturbations measured by sensors is more easily implemented because of an important reduction in the stroke and the velocity of the fine-tuning corrections, comparatively with the full stroke and velocity of the conventional actuators.

In a curve, if the treads of the wheels are cylindrical or if the lateral displacement of the axle is zero, the right-hand side and the left-hand side wheels must have different rotational speeds. After the first axle, all the wheels can rotate independently, even if they are powered. If the wheels are free, the imbalance in rotational velocity is naturally imposed without slippage by the contact force between the wheels and the rails (4). As explained above, the geo-referenced steering can orient the axles after the first one, cancelling the lateral offset.

In the case of the first axle, if the equivalent conicity of the wheel-rails geometry is used to compensate the lateral deviations due to the small inevitable misalignments of the car body and the imperfections of the geo-referenced steering, it is convenient that the two wheels rotate together. Indeed, the conicity mechanism is more effective if the left and right wheels rotate in agreement. Accordingly, it is useful to impose the correct difference in rotational speed between the left and the right wheel.

In a typical mainline track, in which curves may have a radius of about 1000 m, the difference in rotation between the left and the right-hand side wheels of a train at 250 km/h is approximately ±2.6 rpm in a total of about 1600 rpm. The set of planetary gears described below (Figs. 5, 6 and 7) aims to impose this kind of small rotational imbalance between the left and right wheels.

The half-shafts (10) and the half-shafts (19) of the right wheels have conical gears (11) and (18) driven by two sets of planet pinions (12) and (17). In the middle of the assembly there is a central wheel (13) with the bevel gear (14) engaging planet pinions (12), and another bevel gear (16) engaging planet pinions (17) and possibly also a spur gear (15) or an equivalent device, to transmit torque to the central wheel (13). The planet pinions (12) and (17), which are free to rotate along their axis, are mounted on sun-frames (20) and (23), to form two planetary systems. These sun-frames (20) and (23) can turn slowly around the axis of the half-shafts (10) and (19), as will be described below.

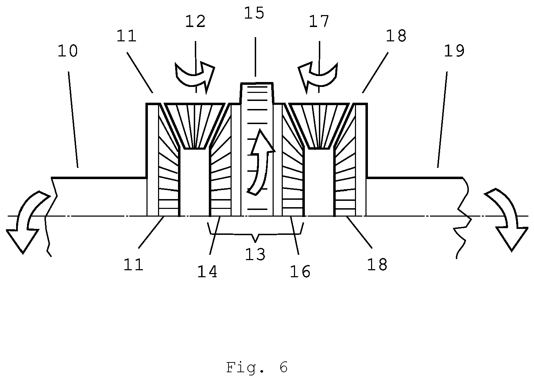

When the sun-frame (20), that holds the set of planet pinions (12), is stationary, the conical gears (11) and (14) rotate with the same velocity but in opposite directions. The arrows in Fig. 6 show the directions of the movement of the bevel gears, of the pinions and of the half-shaft (10).

A symmetric setup drives the other half-shaft (19). When the sun-frame (23), that holds the set of planet pinions (17), is stationary, the bevel gears (16) and (18) rotate with the same rotational velocity but in opposite directions. Conical gear (18) drives the half-shaft (19). The arrows show the directions of the movement of the crowns, of the pinions and of the half-shaft.

When both sun-frames ((20) that holds the planet pinions (12) and (23) that holds the planet pinions (17)) are kept stationary, the two half-shafts (10) and (19) are forced to rotate with the same velocity, in the same direction. If the central wheel (13) is driven by a motor, for instance through the spur gear (15), power is transmitted (through planet pinions (12) and (17)) to both half-shafts (10) and (19) with equal velocity.

When the two sun-frames (20) and (23) turn with a different velocity about the axis of the half-shafts (10) and (19), each ring-frame carrying its own set of planet pinions, the half-shafts (10) and (19) will rotate with a difference in velocity. For instance, suppose that the central wheel (13) is driven at 1600 rpm and the sun-frame (20), that carries the set of planet pinions (12), turns in the same direction at 1 rpm: the conical gear (11) will rotate in the direction of the arrows of Figs. 5 and 6 with a velocity 1600 - 2 = 1598 rpm. Suppose that, at the same time, the sun-frame (23), that holds the set of planet pinions (17), stands still: conical gear (18) will rotate at exactly 1600 rpm in the direction of the arrows of Figs. 5 and 6. Therefore, the two half-shafts, (10) and (19), will rotate with a difference of 2 rpm.

To move a ring-frame in the direction of the corresponding half-shaft, *i.e.,* to move it in the direction that increases the rotational speed of that half-shaft, it is necessary to supply some power to the ring-frame. Conversely, some power is extracted from the half-shaft to the ring-frame if the ring-frame turns in the opposite direction. Consequently, except if the friction losses were unduly large, no power needs to be supplied to a ring-frame to decrease the speed of its half-shaft.

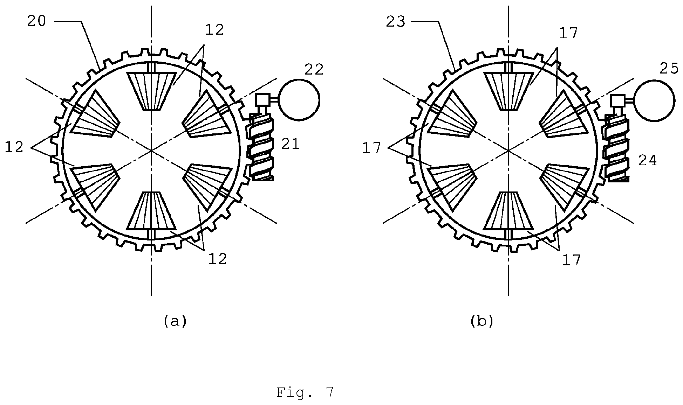

One way of turning the ring-frames at a given exact velocity, about the axis of the two half-shafts, is by means of a worm gear (21) or (24), as shown in Fig. 7. With an adequate lead angle, the worm is self-locking. Another practical way of turning the ring-frames consists in arranging them as a kind of step rotors, controlled electrically.

Markedly accurate control mechanisms, such as those disclosed in the present patent application, can develop a sharply defined wear pattern on the treads of the wheels and possibly a defined wear pattern on the head of the rails, since the wheels always run precisely over the same paths. The solution proposed in the present patent application, to distribute more evenly the wear, consists in combining the precise steering described above with a controlled change of some geometrical parameters. Those changes can be a purposeful small modification of the axle gauge, or a deliberate millimiter yaw error of the axle to displace sideways the rear axles of the train, or some intentional small difference in rotational speed between the two wheels of the same axle, to achieve a similar lateral displacement. According to this approach, the wheels would be made to run exactly over one path, but not always the same path. In each ride, the train would run exactly over a slightly different path, to control the wear distribution.

### Description of the drawings

Figure 1. Schematic plan view of the steering angle *α*₀, measured between the front wheels (2), or the rear wheels (3), and the axis of the car body (1).
Figure 2. Plan view of the trajectories (5) followed by the four wheels of a car, if the rear wheels (3) are not steered (*i.e.,* if they are kept aligned with the longitudinal axis of the car). The car body (1), the front wheels (2) and the rails (4) are also represented in the figure.
Figure 3. Plan view of the car body (1) of a vehicle and of one of its axles made up of one axle (6) (Fig. 3-a), or made up of two non-collinear half-axles (8) independently steered (Fig. 3-b), or made up of two non-collinear half-axels steered together by an Anckermann articulation (9) (Fig. 3-c). The wheels (3) and the actuators (7) are also represented in the figure.

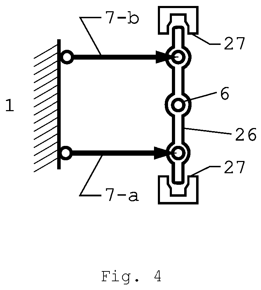

Figure 4. Linear actuators (7), at each extremity of a lever (26), disposed in a twin-arrangement, (7-a) and (7-b), for redundancy. Driven by the actuators, the lever moves one extremity of the wheels axle (6). Stoppers (27) improve the safety in case one element of the pair (7-a) and (7-b) fails. (1) denotes the car body.
Figure 5. Scheme of a transmission that provides a difference in velocity to the two half-shafts (10) and (19). The conical gears (11) and (18) are rigidly linked to the half-shafts. There are two sets of bevel pinions (12) and (17) that are planet pinions of a ring-frame not represented in the drawing. There is also a central wheel with two bevel gears (14) and (16), possibly with a spur gear (15).
Figure 6. A schematic side view, similar to that of Fig. 5, with some parts removed for clarity. The drawing includes the two half-shafts (10) and (19), the conical gears (11) and (18), the two sets of planet pinions (12) and (17), arranged as planet pinion of ring frames, and the central wheel (13), having two bevel gears (14) and (16) and possibly a spur gear (15).
Figure 7. Schemes representing the same setup of Fig. 5. In Fig. 7-a, a sun-frame (20) holds the set of planet pinions (12), in a sun-planet arrangement. The external casing of the ring-frame (20) has teeth engaged by a worm gear (21), driven by a stepping motor (22). Similarly, in Fig. 7-b, a sun-frame (23) holds the sets of planet pinions (17), in a sun-planet arrangement. The external casing of the sun-frame (23) has teeth engaged by a worm gear (24), driven by a stepping motor (25).

### References

José Maria C.S. André, "Transporte interurbano em Portugal" (2 vols.), vol.2: "Concepção técnica de uma alternativa ferroviária para o transporte de passageiros", IST Press, IST - University of Lisbon (1st edition: 2006, 2nd edition: 2008) (in Portuguese).

José Maria C.S. André, "A railway steering system guided by a reference ahead of the train", Vehicle System Dynamics, vol. 51 (2013), pp. 481-496.

US 2462666-A (priority Sep 30, 1943) "Articulated railway vehicle", invented by Alejandro Goicoechea Omar.

## Claims

1. - A method of operating a steering device of a train running on a track with rails, wherein axles (6) or half-axles (8) are steered by actuators (7) according to a local curvature of the said track, wherein:
a) a longitudinal coordinate of the train along the track being measured, providing a geo-reference of the train;
b) that coordinate being used to retrieve, from a computer database, a local radius, R, of the track at that position, or an appropriate steering angle, α₀, at that position;
c) and that steering angle, α₀, being imposed to the axles (6) or half-axles (8) by means of the actuators **characterised in that** the actuators consist of linear actuators, the linear actuators being hydraulic, pneumatic or electrical actuators (7), and the linear actuators being driven by a stepping motor controlled by a geo-referenced control unit in accordance with the geo-reference of the train.

2. - A method of operating a steering device for trains, according to claim 1, **characterized by** the addition of:
- a small compensation to the steering angle, α₀, imposed by actuators (7) in order to take into account the combined effect of heave and roll movements of the car body (1) on the actual steering angle of the axle, or
- a minute yaw error to the ideal steering angle, α₀, to displace the axles of the train sideways and control the wear distribution over the width of the tyres of the wheels and the width of the head of the rails (4).

3. - A method of operating a steering device for trains, according to claim 1, **characterized by** the use of levers or equivalent intermediate devices apt to multiply the force of the actuators (7).

4. - A method of operating a steering device for trains, according to claim 1, **characterized by** imposing:
- a difference in rotational velocity of less than one rotation per second between the two wheels (2) of an axle (6) such that the axle travels slightly displaced sideways relatively to the exact central alignment on the track, such that the contact regions can vary and the wear is conveniently distributed over the width of the tyres of the wheels and the width of the head of the rails, or
- a small variation in the axle gauge, to displace the contact region between the wheel and the rail, so that the wear is conveniently distributed over the width of the tyres of the wheels and the width of the head of the rails.

5. - A method of operating a steering device for trains, according to claim 1, **characterized by** actively adding a correction to the steering angle imposed by the geo-referenced actuators (7); being the said active correction evaluated as a filtered response to the lateral offset, *ε*, of the axle relative to the central alignment of the track; said filter being a low-pass digital filter with an appropriately high amount of damping, capable of producing a slow variation of the active correction, with output steering values bounded within a narrow range of values.

6. - A steering device for a train running on a track with rails, comprising one or more axles, each axle having wheels and spindles, the steering device being configured to implement the method of claim 1 such that each axle is thereby steered, such steering being imposed by means of actuators which consist of linear actuators, the linear actuators being hydraulic, pneumatic or electrical actuators (7), the device further comprising a stepping motor, the linear actuators being driven by the stepping motor controlled by a geo-referenced control unit in accordance with the geo-reference of the train, and the steering device further comprising a database of curvatures and means for measuring a longitudinal coordinate of the train along the track.

7. - A steering device according to claim 6, **characterized in that** each steering actuator (7) consists of a pair of actuators (7-a), (7-b) working on a common lever (26).

8. - A steering device according to claim 6, **characterized in that** the control of the double actuators (7-a), (7-b) is such that,
a) in normal operation, both actuators have the same velocity and impose the same force;
b) in case of failure of one of the two actuators (7-a) or (7-b), the stroke amplitude of the other actuator is increased, to compensate the lack of movement of the impaired actuator.

9. - A steering device according to claim 7, **characterized in that** the lever (26) is fitted with stoppers (27) and, optionally, wherein:
a) in normal operation, the stoppers (27) are secured and unmovable, to limit the amplitude of the translational movement of the lever (26) to the stroke required by the curves of the track where the train is travelling;
b) in case one of the two actuators (7-a or 7-b) breaks apart and the corresponding extremity of the lever (26) is left loose within the range allowed by the normal position of the corresponding stopper (27), that stopper moves to a position in which the movement of said extremity of the lever is restrained and the full steering is brought about by the other actuator (7-a or 7-b) still functional;
c) if an accident blocks one actuator (7-a or 7-b) or destroys one actuator and triggers the displacement of the corresponding stopper (27) to a position where lever (26) is hinged without translation, so that the stroke now demanded to the other actuator, still functional, exceeds the current set point of its stopper, that stopper moves to a position in which the functional actuator is free to move within a broader range than in usual operation.

10. - A steering device according to claim 6, **characterized in that** the wheels (2), (3):
- are collinear and the axle (6) is steered as a whole,
- are not collinear and each wheel of the axle is independently steered, or
- are not collinear and each wheel is steered with a different angle by means of an Ackermann articulation (9).

11. - A steering device according to claim 6, **characterized in that**:
- the wheels of the axle are configured to rotate with independent rotational velocity from each other,
- each one of the two wheels of the axle is configured to rotated by its own motor, or
- the two wheels of the axle are configured to be rotated by a same motor, through an open differential transmission.

12. - A steering device according to claim **6, characterized in that** it has a differential transmission between the two wheels of an axle, such that:
a) each half-shaft (10), (19) of the axle has conical gears (11), (18) in meshing engagement with its own set of planet-pinions (12), (17), so that one half- shaft (10) has one set of planet-pinions (12) and the other half-shaft (19) has another set of planet- pinions (17);
b) each of these two sets of planet-pinions is held by a sun-frame (20), (23) that can either stay stationary or rotate slowly with a precise rotational speed around the axis of the transmission, so that the two sun-frames can rotate with a different velocity around the axis of the transmission;
c) the two sets of planet-pinions (12), (17) are engaged in two symmetrically disposed bevel gears (14), (16) rotating in solid rotation, as if belonging to the same central wheel (13), so that the difference in rotational speed between the two half-shafts (10), (19) depends on the difference in velocity of the slow moving sun-frames (20), (23);
d) if torque is applied to the transmission through the two central bevel gears (14), (16), rotating in solid rotation, each of these two gears drives its own set of planet-pinions (12), (17), carrying its own half- shaft (10), (19) and transmitting torque to it;
e) and also, that, if the sun-frames (20), (23) of said sets of planet-pinions rotate with a given difference in velocity, the two half-shafts of the axle rotate with a given difference in velocity, while torque is transmitted to both of them.

13. - A steering device according to claim 6 and claim 12, **characterized in that** the central wheel (13) of the differential transmission has a spur gear (15) or a similar device to impart torque to the central wheel.

14. - A steering device according to claim 6 and claim 12, **characterized in that**:
a) the differential transmission between two half-shafts is such that the two sun-frames (20), (23) are ring- frames driven by worm gears (21), (24);
b) each of said worm gears is driven by its stepping motor (22), (25), to impart the appropriate small rotational velocity on each of the sun-frames, or
a) the differential transmission between two half-shafts is such that the two sun-frames (20), (23) have the shape of ring-frames with peripheral gears;
b) and the said peripheral gears are driven at slow rotational velocity by the linear movement of a toothed rack, driven by a hydraulic, pneumatic or electrical actuator.

15. - A steering device according to claim 6 and claim 12, **characterized in that**:
- the differential transmission between two half-shafts is such that the two sun-frames (20), (23) are themselves stepping motors, or
- the differential transmission between two half-shafts contains a satellite arrangement of planet- pinions (12), (17) and sun-frames (20), (23) in which the teeth of the sun-frames and planet-pinions are replaced by friction wheels that can be displaced axially, to change the transmission ratio.

## Patentansprüche

1. - Verfahren zum Betreiben einer Lenkvorrichtung eines auf eine Gleis mit Schienen fahrenden Zuges, wobei Achsen (6) oder Halbachsen (8) durch Aktuatoren (7) entsprechend einen lokalen Krümmung dem Gleis gelenkt werden, wobei:
a) eine Längskoordinate des Zuges entlang des Gleis gemessen wird, wodurch eine Georeferenz des Zuges bereitgestellt wird;
b) diese Koordinate verwendet wird, um aus einer Computerdatenbank einen lokalen Radius R dem Gleis an dieser Position oder einen entsprechenden Lenkwinkel α₀ an dieser Position abzurufen;
c) und dieser Lenkwinkel α₀ wird den Achsen (6) oder Halbachsen (8) mittels der Aktuatoren auferlegt, **dadurch gekennzeichnet, dass** die Aktuatoren aus Linearaktuatoren bestehen, wobei die Linearaktuatoren hydraulische, pneumatische oder elektrische Aktuatoren (7) sind und die Linearaktuatoren von einem Schrittmotor angetrieben werden, der von einer georeferenzierten Steuereinheit entsprechend der Georeferenz des Zuges gesteuert wird.

2. - Verfahren zum Betreiben einer Lenkvorrichtung für Züge gemäß Anspruch 1, **gekennzeichnet durch** das Hinzufügen von:
- eine kleine Kompensation des Lenkwinkels α₀, die durch Aktuatoren (7) auferlegt wird, um die kombinierte Wirkung von Hebe- und Rollbewegungen der Fahrzeugkarosserie (1) auf den tatsächlichen Lenkwinkel der Achse zu berücksichtigen, oder
- ein minimaler Gier Fehler zum idealen Lenkwinkel α₀, um die Achsen des Zuges seitlich zu verschieben und die Verschleißverteilung über die Breite der Reifen der Räder und die Breite des Kopf der Schienen (4) zu steuern.

3. - Verfahren zum Betreiben einer Lenkvorrichtung für Züge gemäß Anspruch 1, **gekennzeichnet durch** die Verwendung von Hebeln oder gleichwertigen Zwischenvorrichtungen, die dazu geeignet sind, die Kraft der Aktuatoren (7) zu vervielfachen.

4. - Verfahren zum Betreiben einer Lenkvorrichtung für Züge gemäß Anspruch 1, **gekennzeichnet durch** das Auferlegen von:
- eine Differenz in der Drehgeschwindigkeit von weniger als einer Umdrehung pro Sekunde zwischen den beiden Rädern (2) einer Achse (6), sodass sich die Achse relativ zur exakten Mittelausrichtung auf dem Gleis leicht seitlich verschoben läuft, sodass die die Kontaktbereiche variieren können und der Verschleiß günstig über die Breite der Reifen der Räder und die Breite des Kopf der Schienen verteilt wird, oder
- eine geringe Abweichung im Achsspurweit, um den Kontaktbereich zwischen Rad und Schiene zu verschieben, sodass der Verschleiß gleichmäßig über die Breite der Reifen der Räder und die Breite des Kopf der Schienen verteilt wird.

5. - Verfahren zum Betreiben einer Lenkvorrichtung für Züge nach Anspruch 1, **gekennzeichnet durch** aktives Hinzufügen einer Korrektur des Lenkwinkels, die durch die georeferenzierten Aktuatoren (7) auferlegt wird; wobei die aktive Korrektur als gefilterte Reaktion auf den seitlichen Versatz ε der Achse relativ zur Mittellinie der Gleise bewertet wird; wobei der Filter ein digitales Tiefpassfilter mit einer entsprechend hohen Dämpfung ist, das eine langsame Änderung der aktiven Korrektur erzeugen kann, wobei die ausgegebenen Lenkwerte auf einen engen Wertebereich begrenzt sind.

6. - Lenkvorrichtung für einen Zug, der auf eine Gleis mit Schienen fährt, mit einer oder mehreren Achsen, wobei jede Achse Räder und Spindeln aufweist, wobei die Lenkvorrichtung so konfiguriert ist, dass sie das Verfahren gemäß Anspruch 1 so umsetzt, dass jede Achse dadurch gelenkt wird, wobei diese Lenkung mittels der Aktuatoren, die aus linearen Aktuatoren bestehen, auferlegt wird, wobei die linearen Aktuatoren hydraulisch, pneumatische oder elektrische Aktuatoren (7) sind, wobei die Vorrichtung ferner einen Schrittmotor umfasst, wobei die linearen Aktuatoren durch den Schrittmotor angetrieben werden, der durch eine georeferenzierte Steuereinheit gemäß der Georeferenz des Zuges gesteuert wird, und wobei die Lenkvorrichtung ferner eine Datenbank mit Krümmungen und Mittel zum Messen einer Längskoordinate des Zuges entlang dem Gleis umfasst.

7. - Lenkvorrichtung gemäß Anspruch 6, **dadurch gekennzeichnet, dass** jeder Lenkaktuator (7) aus einem Paar Aktuatoren (7-a), (7-b) besteht, die auf einen gemeinsamen Hebel (26) wirken.

8. - Lenkvorrichtung gemäß Anspruch 6, **dadurch gekennzeichnet, dass** die Steuerung der Doppelaktuatoren (7-a), (7-b) so erfolgt, dass
a) Im Normalbetrieb haben beide Aktuatoren die gleiche Geschwindigkeit und auferlegt die gleiche Kraft.
b) Bei Ausfall eines der beiden Aktuatoren (7-a) oder (7-b) wird die Hublänge des anderen Aktuators erhöht, um die fehlende Bewegung des ausgefallenen Aktuators auszugleichen.

9. - Lenkvorrichtung gemäß Anspruch 7, **dadurch gekennzeichnet, dass** der Hebel (26) mit Anschlägen (27) versehen ist und optional:
a) im Normalbetrieb sind die Anschläge (27) gesichert und unbeweglich, um die Amplitude der Translationsbewegung des Hebels (26) auf den Hub zu begrenzen, der durch die Kurven des Gleis, auf der der Zug fährt, erforderlich ist.
b) falls einer der beiden Aktuatoren (7-a oder 7-b) auseinanderbricht und das entsprechende Ende des Hebels (26) innerhalb des durch die normale Position des entsprechenden Anschlags (27) zulässigen Bereichs lose bleibt, bewegt sich dieser Anschlag in eine Position, in der die Bewegung des Endes des Hebels eingeschränkt wird und die vollständige Lenkung durch den anderen, noch funktionsfähigen, Aktuator (7-a oder 7-b) erfolgt;
c) wenn ein Unfall einen Aktuator (7-a oder 7-b) blockiert oder einen Aktuator zerstört und die Verschiebung des entsprechenden Anschlags (27) in eine Position auslöst, in der der Hebel (26) ohne Translation angelangt ist, sodass der nun vom anderen, noch funktionsfähigen Aktuator geforderte Hub den aktuellen Sollwert seines Anschlags überschreitet, bewegt sich dieser Anschlag in eine Position, in der sich der funktionsfähige Aktuator in einem größeren Bereich als im Normalbetrieb frei bewegen kann.

10. - Lenkvorrichtung gemäß Anspruch 6, **dadurch gekennzeichnet, dass** die Räder (2), (3):
- sind kollinear und die Achse (6) ist insgesamt gelenkt,
- sind nicht kollinear und jedes Rad der Achse ist unabhängig gelenkt, oder
- sind nicht kollinear und jedes Rad ist mittels eines Ackermann-Gelenks (9) in einem anderen Winkel gelenkt.

11. - Lenkvorrichtung gemäß Anspruch 6, **dadurch gekennzeichnet, dass**:
- die Räder der Achse so konfiguriert sind, dass sie sich mit voneinander unabhängiger Drehgeschwindigkeit drehen,
- jedes der beiden Räder der Achse so konfiguriert ist, dass es durch einen eigenen Motor gedreht wird, oder
- die beiden Räder der Achse so konfiguriert sind, dass sie von demselben Motor über ein offener Differentialübertragung gedreht werden.

12. - Lenkvorrichtung gemäß Anspruch 6, **dadurch gekennzeichnet, dass** sie eine Differentialübertragung zwischen den beiden Rädern einer Achse aufweist, sodass:
a) jede Halbwelle (10), (19) der Achse weist konische Zahnräder (11), (18) auf, die mit ihrem eigenen Satz von Planetenrädern (12), (17) in Eingriff stehen, sodass eine Halbwelle (10) einen Satz von Planetenrädern (12) und die andere Halbwelle (19) einen anderen Satz Planetenräder (17) aufweist;
b) jeder dieser beiden Sätze von Planetenrädern wird von einem Sonnenrahmen (20), (23) gehalten, der entweder stationär bleiben oder sich mit einer präzisen Drehzahl langsam um die Achse des Getriebes drehen kann, so dass sich die beiden Sonnenrahmen mit unterschiedlicher Geschwindigkeit um die Achse des Getriebes drehen können;
c) die beiden Sätze von Planetenrädern (12), (17) in zwei symmetrisch angeordnete Kegelräder (14), (16) eingreifen, die sich in solidarische Drehung drehen, als gehörten sie zum selben Zentralrad (13), so dass die Differenz in der Drehzahl zwischen den beiden Halbwellen (10), (19) von der Differenz in der Geschwindigkeit der sich langsam bewegenden Sonnenrahmen (20), (23) abhängt;
d) wenn ein Drehmoment über die beiden solidarische drehenden zentralen Kegelräder (14), (16) auf das Getriebe ausgeübt wird, treibt jedes dieser beiden Zahnräder seinen eigenen Satz von Planetenrädern (12), (17) an, die ihre eigene Halbwelle (10), (19) tragen und das Drehmoment auf diese übertragen;
e) und außerdem, dass, wenn sich die Sonnenrahmen (20), (23) der genannten Sätze von Planetenrädern mit einer bestimmten Geschwindigkeitsdifferenz drehen, sich die beiden Halbwellen der Achse mit einer bestimmten Geschwindigkeitsdifferenz drehen, während das Drehmoment auf beide übertragen wird.

13. - Lenkvorrichtung gemäß Anspruch 6 und Anspruch 12, **dadurch gekennzeichnet, dass** das Zentralrad (13) der Differentialübertragung ein Stirnrad (15) oder eine ähnliche Vorrichtung aufweist, um dem Zentralrad Drehmoment zu übertragen.

14. - Lenkvorrichtung gemäß Anspruch 6 und Anspruch 12, **dadurch gekennzeichnet, dass**:
a) die Differentialübertragung zwischen zwei Halbwellen ist derart, dass die beiden Sonnenrahmen (20), (23) Ringrahmen sind, die von Schneckengetrieben (21), (24) angetrieben werden;
b) jedes der Schneckengetriebe wird von seinem Schrittmotor (22), (25) angetrieben, um jedem der Sonnenrahmen die entsprechende geringe Drehgeschwindigkeit zu verleihen, oder
a) die Differentialübertragung zwischen zwei Halbwellen ist derart, dass die beiden Sonnenrahmen (20), (23) die Form von Ringrahmen mit Umfangszahnrädern haben;
b) und die genannten Umfangszahnräder werden durch die lineare Bewegung einer Zahnstange, die von einem hydraulischen, pneumatischen oder elektrischen Aktuator angetrieben wird, mit langsamer Drehgeschwindigkeit angetrieben.

15. - Lenkvorrichtung gemäß Anspruch 6 und Anspruch 12, **dadurch gekennzeichnet, dass**:
- die Differentialübertragung zwischen zwei Halbwellen ist derart, dass die beiden Sonnenrahmen (20), (23) selbst Schrittmotoren sind, oder
- die Differentialübertragung zwischen zwei Halbwellen eine Satellitenanordnung aus Planetenrädern (12), (17) und Sonnenrahmen (20), (23) enthält, bei der die Zähne der Sonnenrahmen und Planetenräder durch axial verschiebbare Reibräder ersetzt sind, um das Übersetzungsverhältnis zu verändern.

## Revendications

1. - Procédé de fonctionnement d'un dispositif de direction d'un train circulant sur une voie ferrée avec rails, dans lequel des essieux (6) ou des demi-essieux (8) sont dirigés par des actionneurs (7) en fonction d'une courbure locale de ladite voie, dans lequel:
a) une coordonnée longitudinale du train le long de la voie est mesurée, fournissant une référence géographique du train;
b) cette coordonnée est utilisée pour récupérer, à partir d'une base de données informatique, un rayon local, R, de la voie à cette position, ou un angle de direction approprié, α₀, à cette position;
c) et cet angle de direction, α₀, étant imposé aux essieux (6) ou demi-essieux (8) au moyen des actionneurs, **caractérisé en ce que** les actionneurs consistent en des actionneurs linéaires, les actionneurs linéaires étant des actionneurs hydrauliques, pneumatiques ou électriques (7), et les actionneurs linéaires étant entraînés par un moteur pas à pas commandé par une unité de commande géoréférencée conformément à la géoréférence du train.

2. - Procédé de fonctionnement d'un dispositif de direction pour trains selon la revendication 1, **caractérisé par** l'ajout:
- d'une petite compensation de l'angle de direction, α₀, imposée par des actionneurs (7) afin de prendre en compte l'effet combiné des mouvements de tangage et de roulis de la caisse de wagon (1) sur l'angle de direction réel de l'essieu, ou
- d'une erreur de lacet infime à l'angle de direction idéal, α₀, afin de déplacer les essieux du train latéralement et de contrôler la répartition de l'usure sur la largeur des bandages des roues et la largeur du champignon des rails (4).

3. - Procédé de fonctionnement d'un dispositif de direction pour trains selon la revendication 1, **caractérisé par** l'utilisation de leviers ou de dispositifs intermédiaires équivalents aptes à multiplier la force des actionneurs (7).

4. - Procédé de fonctionnement d'un dispositif de direction pour trains selon la revendication 1, **caractérisé par** l'imposition:
- d'une différence de vitesse de rotation inférieure à un tour par seconde entre les deux roues (2) d'un essieu (6), de telle sorte que l'essieu se déplace légèrement décalé latéralement par rapport à l'alignement central exact sur la voie, de telle sorte que les zones de contact puissent varier et que l'usure soit répartie de manière appropriée sur la largeur des bandages des roues et la largeur du champignon des rails, ou
- d'une petite variation du gabarit des essieux, afin de déplacer la zone de contact entre la roue et le rail, de manière à répartir l'usure de manière appropriée sur la largeur des bandages des roues et la largeur du champignon des rails.

5. - Procédé de fonctionnement d'un dispositif de direction pour trains selon la revendication 1, **caractérisé en ce qu'**il ajoute activement une correction à l'angle de direction imposé par les actionneurs géoréférencés (7); ladite correction active étant évaluée comme une réponse filtrée au décalage latéral, ε, de l'essieu par rapport à l'alignement central de la voie; ledit filtre étant un filtre numérique passe-bas avec un amortissement suffisamment élevé, capable de produire une variation lente de la correction active, avec des valeurs de direction de sortie limitées dans une plage étroite de valeurs.

6. - Dispositif de direction pour un train circulant sur une voie ferrée avec rails, comprenant un ou plusieurs essieux, chaque essieu comportant des roues et des fusées, le dispositif de direction étant configuré pour mettre en œuvre le procédé selon la revendication 1, de telle sorte que chaque essieu soit ainsi dirigé, cette direction étant imposée au moyen d'actionneurs qui consistent en actionneurs linéaires, les actionneurs linéaires étant des actionneurs hydrauliques, pneumatiques ou électriques (7), le dispositif comprenant en outre un moteur pas à pas, les actionneurs linéaires étant entraînés par le moteur pas à pas commandé par une unité de commande géoréférencée conformément à la géoréférence du train, et le dispositif de direction comprenant en outre une base de données de courbures et des moyens pour mesurer une coordonnée longitudinale du train le long de la voie.

7. - Dispositif de direction selon la revendication 6, **caractérisé en ce que** chaque actionneur de direction (7) est constitué d'une paire d'actionneurs (7-a), (7-b) agissant sur un levier commun (26).

8. - Dispositif de direction selon la revendication 6, **caractérisé en ce que** la commande des doubles actionneurs (7-a), (7-b) est telle que,
a) en fonctionnement normal, les deux actionneurs ont la même vitesse et imposent la même force;
b) en cas de défaillance de l'un des deux actionneurs (7-a) ou (7-b), l'amplitude de course de l'autre actionneur est augmentée, afin de compenser l'absence de mouvement de l'actionneur défaillant.

9. - Dispositif de direction selon la revendication 7, **caractérisé en ce que** le levier (26) est équipé de butées (27) et, en option, dans lequel:
a) en fonctionnement normal, les butées (27) sont fixées et immobiles, afin de limiter l'amplitude du mouvement de translation du levier (26) à la course requise par les courbes de la voie sur laquelle circule le train;
b) dans le cas où l'un des deux actionneurs (7-a ou 7-b) se brise et où l'extrémité correspondante du levier (26) est laissée libre dans la plage autorisée par la position normale de la butée correspondante (27), cette butée se déplace vers une position dans laquelle le mouvement de ladite extrémité du levier est restreint et la direction complète est assurée par l'autre actionneur (7-a ou 7-b) encore fonctionnel;
c) si un accident bloque un actionneur (7-a ou 7-b) ou détruit un actionneur et déclenche le déplacement de la butée correspondante (27) vers une position où le levier (26) est articulé sans translation, de sorte que la course désormais exigée de l'autre actionneur, toujours fonctionnel, dépasse le point de consigne actuel de sa butée, cette butée se déplace vers une position dans laquelle l'actionneur fonctionnel est libre de se déplacer dans une plage plus large que lors d'un fonctionnement normal.

10. - Dispositif de direction selon la revendication 6, **caractérisé en ce que** les roues (2), (3):
- sont colinéaires et l'essieu (6) est dirigé dans son ensemble,
- ne sont pas colinéaires et chaque roue de l'essieu est dirigée indépendamment, ou
- ne sont pas colinéaires et chaque roue est dirigée avec un angle différent au moyen d'une articulation Ackermann (9).

11. - Dispositif de direction selon la revendication 6, **caractérisé en ce que** :
- les roues de l'essieu sont configurées pour tourner avec une vitesse de rotation indépendante les unes des autres,
- chacune des deux roues de l'essieu est configurée pour être entraînée en rotation par son propre moteur, ou
- les deux roues de l'essieu sont configurées pour être entraînées en rotation par un même moteur, par l'intermédiaire d'une transmission à différentiel ouvert.

12. - Dispositif de direction selon la revendication 6, **caractérisé en ce qu'**il comporte une transmission différentielle entre les deux roues d'un essieu, de telle sorte que:
a) chaque demi-arbre (10), (19) de l'essieu comporte des engrenages coniques (11), (18) s'engageant avec son propre ensemble de pignons planétaires (12), (17), de sorte qu'un demi-arbre (10) comporte un ensemble de pignons satellites (12) et l'autre demi-arbre (19) comporte un autre ensemble de pignons satellites (17) ;
b) chacun de ces deux ensembles de pignons planétaires est maintenu par un cadre solaire (20), (23) qui peut soit rester fixe, soit tourner lentement à une vitesse de rotation précise autour de l'axe de la transmission, de sorte que les deux cadres solaires peuvent tourner à une vitesse différente autour de l'axe de la transmission ;
c) les deux ensembles de pignons planétaires (12), (17) sont engagés dans deux engrenages coniques (14), (16) disposés symétriquement et tournant en rotation solidaire, comme s'ils appartenaient à la même roue centrale (13), de sorte que la différence de vitesse de rotation entre les deux demi-arbres (10), (19) dépend de la différence de vitesse des cadres solaires (20), (23) se déplaçant lentement;
d) si un couple est appliqué à la transmission par l'intermédiaire des deux engrenages coniques centraux (14), (16), tournant en rotation solidaire, chacun de ces deux engrenages entraîne son propre ensemble de pignons planétaires (12), (17), portant son propre demi-arbre (10), (19) et lui transmettant le couple;
e) et également, que, si les cadres solaires (20), (23) desdits ensembles de pignons planétaires tournent avec une différence de vitesse donnée, les deux demi-arbres de l'essieu tournent avec une différence de vitesse donnée, tandis que le couple est transmis aux deux.

13. - Dispositif de direction selon la revendication 6 et la revendication 12, **caractérisé en ce que** la roue centrale (13) de la transmission différentielle comporte un engrenage droit (15) ou un dispositif similaire pour transmettre le couple à la roue centrale.

14. - Dispositif de direction selon la revendication 6 et la revendication 12, **caractérisé en ce que** :
a) la transmission différentielle entre deux demi-arbres est telle que les deux cadres solaires (20), (23) sont des cadres annulaires entraînés par des engrenages à vis sans fin (21), (24);
b) chacun desdits engrenages à vis sans fin est entraîné par son moteur pas à pas (22), (25), afin de communiquer la petite vitesse de rotation appropriée à chacun des cadres solaires, ou
a) la transmission différentielle entre deux demi-arbres est telle que les deux cadres solaires (20), (23) ont la forme de cadres annulaires avec des engrenages périphériques ;
b) et lesdits engrenages périphériques sont entraînés à faible vitesse de rotation par le mouvement linéaire d'une crémaillère, entraînée par un actionneur hydraulique, pneumatique ou électrique.

15. - Dispositif de direction selon la revendication 6 et la revendication 12, **caractérisé en ce que** :
- la transmission différentielle entre deux demi-arbres est telle que les deux cadres solaires (20), (23) sont eux-mêmes des moteurs pas à pas, ou
- la transmission différentielle entre deux demi-arbres comprend un agencement satellite de pignons planétaires (12), (17) et de cadres solaires (20), (23), dans lequel les dents des cadres solaires et des pignons planétaires sont remplacées par des roues à friction pouvant être déplacées axialement, afin de modifier le rapport de transmission.
